# DEMANDE DE BREVET EUROPEEN

(11) **EP 2 019 023 A1**
(43) Date de publication de la demande: **28.01.2009**
(21) Numéro de dépôt: 08159968.0
(22) Date de dépôt: 09.07.2008
(51) Int. Cl.: B62D 7/14, B60G 7/00, B62D 7/18

(54) **Train arrière directeur pour automobile, comportant un pivot de roue déformable**

(30) Priorité: 24.07.2007 FR 0756694
(71) Demandeur: Peugeot Citroën Automobiles SA, 78943 Vélizy-Villacoublay Cedex (FR)
(72) Inventeur: Palpacuer, Eric, 75013 Paris (FR)

(57) **Abrégé**

Train arrière directeur (51) en particulier pour véhicule automobile, comportant des roues arrière portées chacune par une fusée (6) reliée par au moins un bras de suspension (8) au châssis d'un véhicule, et une commande de direction des roues arrière actionnant un levier de braquage (28), caractérisé en ce que chaque fusée (6) est portée par un pivot (40) qui est relié de manière rigide aux bras de suspension (8), et en ce que le levier de braquage (28) provoque une déformation du pivot entraînant une rotation des fusées (6) suivant un axe sensiblement vertical, pour réaliser un braquage des roues arrière.

## Description

La présente invention concerne un train arrière pour véhicule automobile, équipé d'une commande de direction des roues.

Les véhicules automobiles comportent dans certains cas une commande de braquage des roues arrière qui agit en coopération avec la commande de braquage des roues avant actionnée par le conducteur.

L'angle de braquage des roues arrière est généralement dépendant de la vitesse du véhicule, suivant une fonction continue. Pour les basses vitesses, les roues arrière sont orientées dans le sens opposé aux roues avant pour diminuer le rayon de braquage du véhicule et améliorer la maniabilité du véhicule, par exemple pour les manoeuvres du véhicule, alors que pour les vitesses élevées les roues arrière sont généralement orientées dans le même sens que les roues avant pour améliorer la stabilité du véhicule, par exemple pour un changement rapide de file de circulation.

Une commande de braquage des roues arrière de ce type est décrite dans le document FR-A1-2612848. Il présente un volant de direction lié à un boîtier de direction pour le braquage des roues avant de manière classique, ce boîtier comportant de plus une sortie pour commander le braquage des roues arrière par la rotation d'un arbre de commande disposé suivant l'axe longitudinal du véhicule, qui relie le train avant au train arrière.

Au niveau du train arrière, deux biellettes disposées transversalement de part et d'autre de l'axe du véhicule sont liées vers l'intérieur à l'arbre de commande, et vers l'extérieure à des fusées portant chacune le moyeu d'une roue arrière. Ces fusées sont liées elles mêmes par des articulations permettant un pivotement suivant un axe sensiblement vertical, à des bras de suspension fixés au châssis du véhicule.

De cette manière, une rotation de l'arbre de commande entraîne par les biellettes un pivotement des fusées dans un plan horizontal pour réaliser le braquage des roues arrière.

Un inconvénient principal de ce dispositif de braquage des roues arrière est qu'il nécessite des articulations entre les fusées des roues arrière et le châssis, plus particulièrement entre ces fusées et les bras de suspension, pour permettre la rotation des fusées arrière dans un plan horizontal suivant au moins quelques degrés. Ces articulations comportent généralement des éléments élastiques, par exemple en caoutchouc du type « silent-bloc », ou des composants mécaniques comme des paliers ou des rotules, pour permettre un mouvement de rotation entre les deux parties reliées.

Les articulations sont des composants de sécurité comprenant plusieurs composants, elles sont relativement chères et encombrantes. De plus elles comportent des pièces d'usure qui peuvent prendre du jeu, les caoutchoucs vieillissent et les frottements des paliers peuvent provoquer une usure, ces liaisons demandent une surveillance.

La présente invention a notamment pour but d'éviter ces inconvénients de la technique antérieure et d'apporter à la réalisation d'un train arrière de véhicule automobile une solution simple, efficace et économique, pour permettre le braquage des fusées.

Elle propose à cet effet un train arrière directeur en particulier pour véhicule automobile, comportant des roues arrière portées chacune par une fusée reliée par au moins un bras de suspension au châssis d'un véhicule, et une commande de direction des roues arrière, caractérisé en ce que chaque fusée est portée par un pivot qui est relié de manière rigide aux bras de suspension, et en ce que la commande de direction des roues arrière provoque une déformation du pivot entraînant une rotation des fusées suivant un axe sensiblement vertical, pour réaliser un braquage des roues arrière.

Un avantage essentiel du train arrière selon l'invention est que les pivots étant reliés aux bras de suspension de manière rigide et permettant le braquage des roues par déformation, on n'utilise pas d'articulation qui sont des composants relativement onéreux.

De plus, le train arrière selon l'invention peut comporter une ou plusieurs des caractéristiques suivantes qui peuvent être combinées entre elles.

Avantageusement le pivot comporte une barre de torsion disposée sensiblement verticalement, reliant les bras de suspension à la fusée.

Suivant une caractéristique de l'invention, la barre de torsion comporte dans une partie centrale un bossage supportant la fusée et un levier de braquage relié à la commande de direction sur lequel s'exerce un effort de braquage des roues.

La barre de torsion peut comporter deux demi parties de longueur sensiblement égales, réparties de part et d'autre du bossage central.

Le pivot peut être formé d'une seule pièce comprenant la barre de torsion, le bossage central supportant la fusée et le levier de braquage, ainsi que des parties de fixation sur les bras.

Avantageusement, le pivot est formé par forgeage d'un acier.

Suivant une caractéristique de l'invention une section de la barre de torsion réalisée perpendiculairement à la longueur, a une forme allongée comportant un grand axe orienté transversalement.

Les extrémités supérieure et inférieure de la barre de torsion peuvent se terminer par des parties planes comportant des perçages pour la fixation sur les bras de suspension.

Le bras de suspension peut comporter une partie en forme de chape, chaque extrémité de la chape recevant une partie plane de fixation de la barre de torsion.

Avantageusement, la barre de torsion a un axe légèrement décalé par rapport à la vertical.

Selon un mode de réalisation particulier de l'invention, la commande de direction des roues arrière exerce un effort suivant une direction sensiblement transversale, sur un levier de braquage lié à la fusée qui a un axe sensiblement longitudinal.

Selon un autre mode de réalisation particulier de l'invention, la commande de direction des roues arrière exerce un effort suivant une direction sensiblement longitudinale, sur un levier de braquage lié à la fusée qui a un axe sensiblement transversal.

L'invention sera mieux comprise et d'autres caractéristiques et avantages apparaîtront plus clairement à la lecture de la description ci-après donnée à titre d'exemple en référence aux dessins annexés dans lesquels :
- la figure 1 est une coupe en vue arrière d'un demi train arrière directeur suivant l'art antérieur, représenté de manière schématique ;
- la figure 2 est une coupe en vue de dessus du demi-train arrière présenté figure 1 ;
- la figure 3 est une coupe en vue arrière d'un demi-train arrière directeur suivant l'invention, représenté de manière schématique ;
- la figure 4 est une coupe en vue de dessus du demi-train arrière présenté figure 3 ;
- la figure 5 est une coupe en vue de dessus du demi-train arrière selon une variante ;
- la figure 6 est un dessin en perspective d'un demi-train suivant l'invention ;
- la figure 7 est un dessin en perspective de ce demi-train, la roue étant démontée ;
- la figure 8 est une vue de détail d'un pivot de roue de ce demi-train.

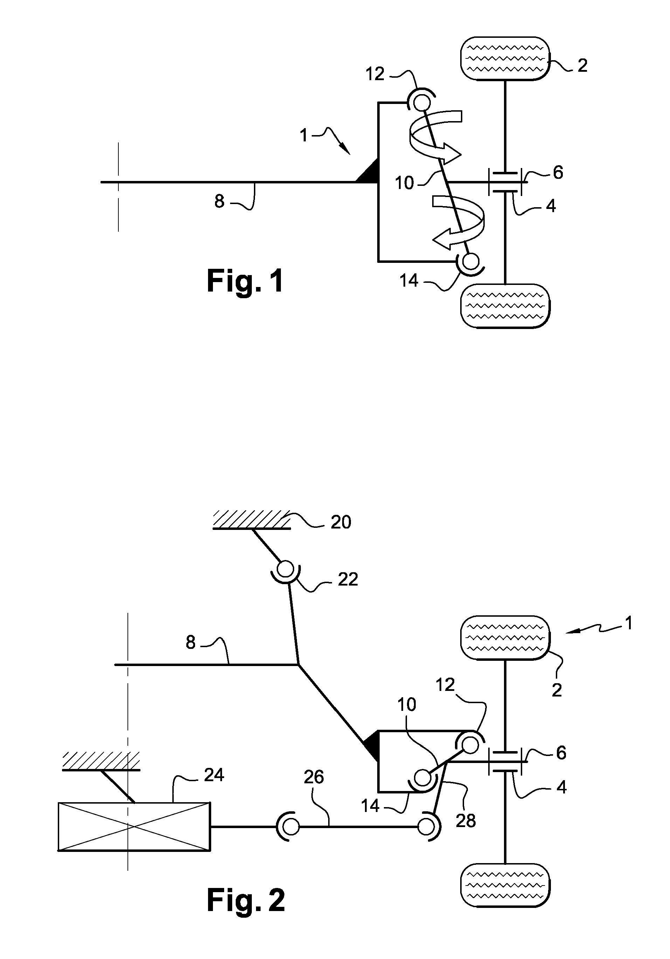

Les figures 1 et 2 représentent un demi-train arrière 1 directeur d'un véhicule automobile, comprenant une roue 2 dont le moyeu 4 est porté par une fusée 6 comportant des roulements. Le demi-train 1 comporte un bras de suspension 8 lié au châssis 20 par des suspensions non représentées, la partie extérieure du bras 8 suivant une direction latérale du véhicule, supporte par deux articulations supérieure 12 et inférieure 14 un pivot de roue 10 qui porte dans une partie centrale la fusée 6.

Les articulations 12 et 14 sont sensiblement alignées suivant une verticale, l'axe passant par ces articulations constitue un axe de pivotement du pivot de roue 10, permettant à la roue 2 de braquer dans un plan perpendiculaire à l'axe de pivotement. On notera que cet axe de pivotement peut être légèrement décalé par rapport à la verticale, pour donner une géométrie particulière au débattement de la roue 2 lors du braquage.

Le bras de suspension 8 est lié par ailleurs au châssis 20 du véhicule par une articulation 22 réalisant un guidage du bras tout en permettant une oscillation pour réaliser le débattement de la suspension.

De plus, un actionneur de direction 24 est fixé au châssis 20. Il est dépendant de la commande de direction du train avant du véhicule pilotée par le conducteur, et réalise suivant certaines lois de commande le braquage des roues arrière en déplaçant suivant un axe transversal une biellette de direction 26 disposée transversalement. La biellette 26 comportant des articulations à ses extrémités, agit sur un levier de braquage 28 solidaire du pivot de roue 10, qui est disposé sensiblement longitudinalement.

De la même manière, l'actionneur agit aussi sur l'autre demi-train arrière du véhicule par un mouvement transversal pour commander le braquage de l'autre roue arrière. De cette façon, un mouvement de l'actionneur dépendant de la position du volant de direction ainsi que d'autres paramètres comme la vitesse du véhicule, est transformé en un pivotement des pivots de roue 10 pour réaliser le braquage des roues arrière 2.

L'actionneur 24 peut comporter différents systèmes d'actionnement, il peu être lié de manière mécanique à la direction du train avant, en utilisant par exemple un arbre longitudinal entraîné en rotation à partir d'un boîtier de direction à crémaillère. Il peut comprendre aussi une source de puissance autonome comme un vérin ou un moteur, utilisant une source d'énergie électrique ou hydraulique.

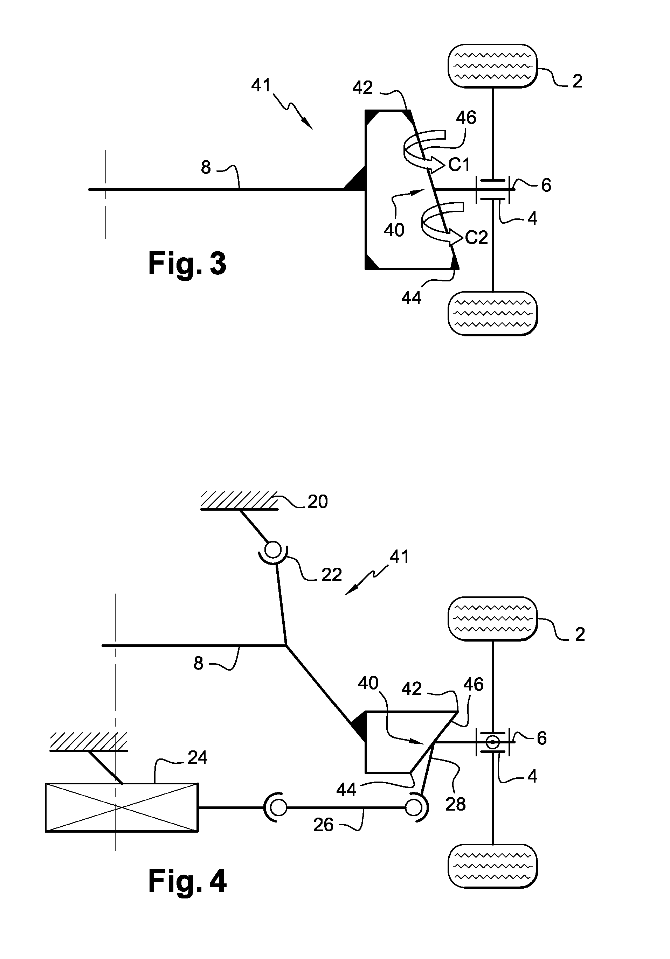

Les figures 3 et 4 présentent un demi-train arrière 41 suivant l'invention, dont la roue 2 est portée par un pivot de roue 40 lié au bras de suspension 8. Le pivot de roue 40 comprend une barre de torsion métallique 46 disposée sensiblement verticalement, supportant de manière rigide dans une partie centrale l'axe de la fusée 6. Les extrémités de la barre de torsion sont fixées de manière rigide par des points supérieur 42 et inférieur 44, à une extrémité latérale extérieure du bras de suspension 8 qui a une forme de chape.

Un actionneur de direction 24 fixé au châssis 20, réalise le braquage des roues arrière en déplaçant latéralement une biellette de direction 26 comportant des articulations à ses extrémités. La biellette 26 disposée transversalement agit sur un levier de braquage 28 disposé sensiblement longitudinalement, qui est lié par sa partie avant à une partie centrale de la barre de torsion 46, à proximité de la fixation de la fusée 6.

Le fonctionnement du train arrière directeur est le suivant. L'actionneur 24 applique une force sensiblement transversale sur l'extrémité arrière du levier de braquage 28, ce qui transmet un couple de rotation C au point milieu de la barre de torsion 46 par ailleurs fixée de manière rigide à ses extrémités. Ce couple de torsion C se partage en deux couples C1 et C2 appliqués à chaque demi parties supérieure et inférieure de la barre de torsion 46, ce qui provoque une torsion de cette barre suivant son axe.

La fusée 6 fixée sur la partie centrale de la barre de torsion 46, suit le mouvement et pivote aussi autour de l'axe de la barre de torsion, imposant à la roue 2 un mouvement de rotation dans un plan perpendiculaire à l'axe de la barre de torsion 46, qui entraîne le braquage de la roue supportée 2.

On réalise ainsi de manière simple et avec un nombre réduit de composants, un pivot de roue pour le braquage des roues arrière permettant de réaliser un petit angle, une valeur de 3 degrés étant généralement suffisante. De plus, la barre de torsion 46 provoque automatiquement par son effet ressort un rappel de la roue 2 dans la position alignée quand l'effort fourni par l'actionneur 24 diminue.

On notera que ce pivot de roue 40 ne comprend pas d'articulation comportant un glissement ou un frottement, ni de pièce souple comme des élastomères, tous les composants étant liés de manière rigide ce qui est favorable pour l'usure et le vieillissement. De plus, l'ensemble peut être compact et économique, les articulations nécessitant généralement un certain volume et comportant des pièces assez onéreuses.

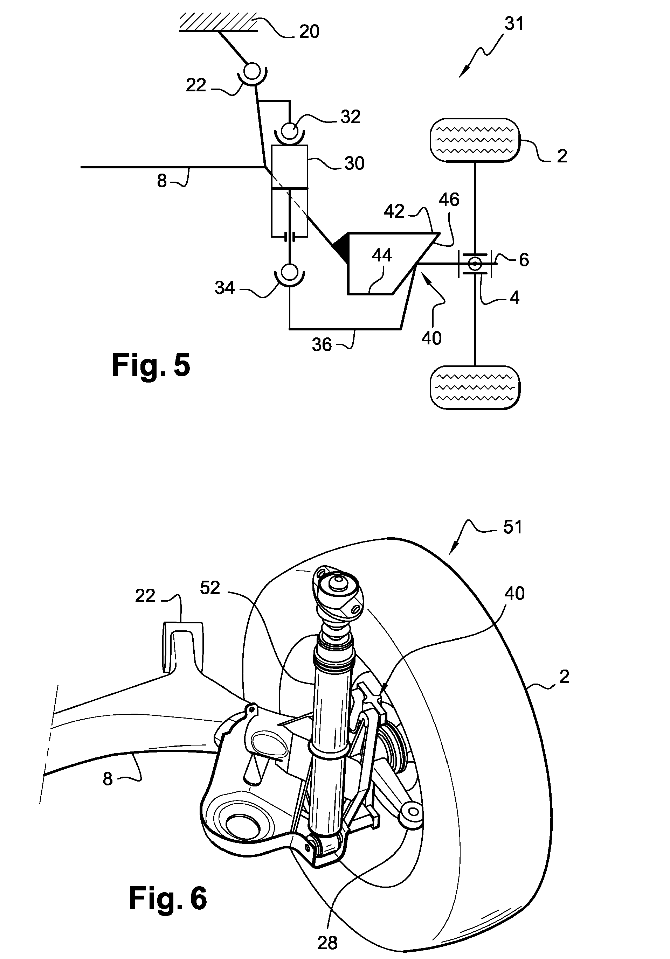

La figure 5 présente une variante 31 du demi-train arrière suivant l'invention. L'actionneur de direction comprend un vérin 30 disposé longitudinalement, fixé vers l'avant au bras de suspension 8 par une articulation avant 32, et vers l'arrière par une articulation arrière 34 à un levier de braquage 36 solidaire du pivot de roue 40. On notera que dans ce cas le levier de braquage 36 est disposé sensiblement transversalement pour recevoir le mouvement du vérin 30 qui est longitudinal.

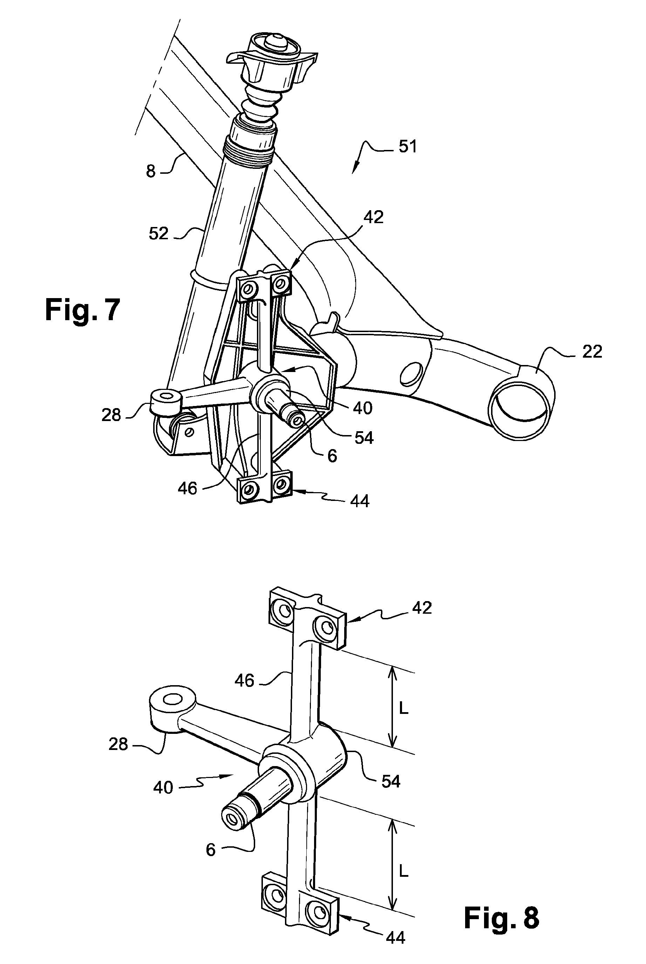

Les figures 6 et 7 présentent un dessin d'un demi-train arrière 51 suivant l'invention, la roue 2 ainsi que le moyeu tournant sur la fusée 6 étant démontés sur la deuxième figure, la figure 8 présente le pivot de roue 40 seul.

Le bras de suspension 8 est composé de tôles embouties et soudées formant un caisson rigide, il comporte différentes formes pour recevoir les ressorts de suspension non représentés, un amortisseur 52, et l'articulation 22 de liaison avec le châssis.

Le pivot de roue 40 comprend une barre de torsion métallique 46 disposée sensiblement verticalement, sa partie centrale suivant l'axe vertical forme un bossage 54 supportant l'axe de la fusée 6 recevant le moyeu 4 de la roue 2, ainsi que le levier de braquage 28 qui s'étend vers l'arrière. De préférence pour égaliser les contraintes de torsion, la barre de torsion 46 comporte deux demi parties de longueur égales L réparties de part et d'autre du bossage central 54.

Le bras de suspension 8 se termine latéralement vers l'extérieur par une partie en forme de chape dont la partie centrale a une forme en creux pour recevoir le bossage central 54, chaque extrémité de la chape recevant les extrémités de la barre de torsion fixées de manière rigide par des points supérieur 42 et inférieur 44. Cette chape peut constituer une pièce rapportée sur le bras de suspension 8, ou être réalisée directement à partir des tôles du bras.

La barre de torsion 46 à une section perpendiculaire à la longueur constante, de forme allongée comportant un grand axe orienté transversalement. Les extrémités supérieure 42 et inférieure 44 de la barre de torsion se terminent par des parties planes suivant un plan vertical orienté longitudinalement, qui comportent chacune deux perçages pour la fixation sur une partie correspondante du bras de suspension 8.

Le pivot de roue 40 peut être réalisé en acier forgé fournissant des caractéristiques mécaniques élevées, mais aussi par moulage ou usinage, pour obtenir d'une pièce les deux parties supérieure et inférieure de la barre de torsion 46, le bossage central supportant la fusée 6 et le levier de braquage 28, et les fixations d'extrémités 42, 44.

La section de la barre de torsion 46 comportant un grand axe orienté transversalement, permet d'obtenir à la fois une bonne rigidité pour résister aux efforts latéraux qui s'exercent sur les pneus dans les virages notamment, ainsi qu'une souplesse suffisante en torsion permettant un braquage de la roue de l'ordre de 3 degrés sans demander un effort fourni par l'actionneur trop élevé, un effort de l'ordre de 5000 Newton pour cet angle représentant un bon compromis.

En variante le moyeu peut être constitué de plusieurs pièces assemblées, et la barre de torsion peut avoir d'autres sections, ainsi que d'autres types de fixation. L'actionneur peut comprendre tous types de système d'actionnement, lié de manière mécanique ou non au boîtier de direction des roues avant.

## Revendications

1. Train arrière directeur (31, 41, 51) en particulier pour véhicule automobile, comportant des roues arrière (2) portées chacune par une fusée (6) reliée par au moins un bras de suspension (8) au châssis (20) d'un véhicule, et une commande de direction (24) des roues arrière, **caractérisé en ce que** chaque fusée (6) est portée par un pivot (40) qui est relié de manière rigide aux bras de suspension (8), et **en ce que** la commande de direction des roues arrière (24) provoque une déformation du pivot entraînant une rotation des fusées (6) suivant un axe sensiblement vertical, pour réaliser un braquage des roues arrière.

2. Train arrière directeur selon la revendication 1, **caractérisé en ce que** le pivot (40) comporte une barre de torsion (46) disposée sensiblement verticalement, reliant les bras de suspension (8) à la fusée (6).

3. Train arrière directeur selon la revendication 2, **caractérisé en ce que** la barre de torsion (46) comporte dans une partie centrale un bossage (54) supportant la fusée (6), et un levier de braquage (28) relié à la commande de direction (24) sur lequel s'exerce un effort de braquage des roues (2).

4. Train arrière directeur selon la revendication 3, **caractérisé en ce que** la barre de torsion (46) comporte deux demi parties de longueur sensiblement égales réparties de part et d'autre du bossage central (54).

5. Train arrière directeur selon les revendications 3 ou 4, **caractérisé en ce que** le pivot (40) est formé d'une seule pièce comprenant la barre de torsion (46), le bossage central supportant la fusée (6) et le levier de braquage (28), ainsi que des parties de fixation sur les bras (8).

6. Train arrière directeur selon l'une des revendications 3 à 5, **caractérisé en ce que** le pivot (40) est formé par forgeage d'un acier.

7. Train arrière directeur selon la revendication 2, **caractérisé en ce qu'**une section de la barre de torsion (46) réalisée perpendiculairement à la longueur, a une forme allongée comportant un grand axe orienté transversalement.

8. Train arrière directeur selon la revendication 2, **caractérisé en ce que** les extrémités supérieure (42) et inférieure (44) de la barre de torsion (46) se terminent par des parties planes comportant des perçages pour la fixation sur les bras de suspension (8).

9. Train arrière directeur selon la revendication 8, **caractérisé en ce que** le bras de suspension 8 comporte une partie en forme de chape, chaque extrémité de la chape recevant une partie plane (42, 44) de fixation de la barre de torsion (46).

10. Train arrière directeur selon l'une quelconque des revendications 2 à 9, **caractérisé en ce que** la barre de torsion (46) a un axe légèrement décalé par rapport à la vertical.

11. Train arrière directeur selon l'une quelconque des revendications précédentes, **caractérisé en ce que** la commande de direction des roues arrière (24) exerce un effort suivant une direction sensiblement transversale, sur un levier de braquage (28) lié à la fusée (6) qui a un axe sensiblement longitudinal.

12. Train arrière directeur selon l'une des revendications 1 à 10, **caractérisé en ce que** la commande de direction des roues arrière (30) exerce un effort suivant une direction sensiblement longitudinale, sur un levier de braquage (36) lié à la fusée (6) qui a un axe sensiblement transversal.
